# EUROPEAN PATENT SPECIFICATION

(11) **EP 2 587 743 B1**
(45) Date of publication and mention of the grant of the patent: **30.07.2014**
(21) Application number: 11186327.0
(22) Date of filing: 24.10.2011
(51) Int. Cl.: H04L 12/58, H04L 29/06

(54) **Hypertext link verification in encrypted e-mail for mobile devices**
Hypertextlink-Verifizierung in verschlüsselter E-Mail für mobile Vorrichtungen
Vérification de liens hypertexte dans un e-mail crypté pour dispositifs mobiles

(43) Date of publication of application: 01.05.2013
(73) Proprietor: BlackBerry Limited, Waterloo, ON N2K 0A7 (CA)
(72) Inventor: Adams, Neil Patrick, Waterloo, Ontario N2L 3W8 (CA); Singh, Ravi, Mississauga, Ontario L4W 0B5 (CA)
(74) Representative: Patel, Binesh

(56) References cited:
- US-A1- 2005 076 221
- US-A1- 2006 123 464
- André Bergholz ET AL: "New Filtering Approaches for Phishing Email", , 18 January 2009 (2009-01-18), pages 1-31, XP55022423, Retrieved from the Internet: URL:http://www.antiphishresearch.org/downl oads/journal-08-12-16-final.pdf [retrieved on 2012-03-20]
- Sans Institute ET AL: "Encrypted E-mail: Close One Door, Open Another", , 2001, pages 1-11, XP55022411, Retrieved from the Internet: URL:http://www.sans.org/reading_room/white papers/malicious/encrypted-e-mail-close-do or-open_105 [retrieved on 2012-03-20]

## Description

### TECHNICAL FIELD

The current description relates to verifying hypertext links and in particular verifying hypertext links in encrypted e-mail received on mobile devices.

### BACKGROUND

Mobile devices, such as smart phones or tablets, can receive data wirelessly including e-mail messages. E-mail messages may include hypertext transfer protocol (HTTP) formatted links that a recipient can click on in an e-mail client to open the link in a web browser. Unfortunately, the use of hypertext links may be used for malicious purposes. For example, a sender may include a hypertext link which appears to take a recipient to a financial institution web page to enter their banking information, when in fact the web site is not associated with the bank. When a user clicks the link, they are brought to a web site that appears to be a bank web site and may be induced into entering their banking information. If the recipient enters their banking information into the malicious web site, the operator of the web site will have access to the recipients banking information. These types of attacks may be commonly referred to as 'phishing' attacks. Alternatively the link may reference a webpage or executable program that contains malicious code which may comprise the device or applications on the device when executed. Spam filters can be used to identify potentially malicious e-mail or http links contained in the e-mail and provide a notification to the user.

Typical verification techniques require the e-mail message to be unencrypted to operate. In a mobile or wireless environment the use of encryption is common particularly in government or corporate environments. E-mail encryption may use asymmetric encryption techniques, which use a private key accessible only to the sender and a public key accessible to everyone for the decryption and the encryption of the e-mail respectively. A sender may use the public key of the recipient to encrypt the e-mail message which is sent to the recipient. The recipient can then decrypt the encrypted e-mail message using their private key, which only the recipient has access to. Unfortunately, it is not possible to extract hypertext links from an encrypted email while it is encrypted. As a result it is difficult to verify hypertext links within an encrypted e-mail and a spam filter is not useful in quarantining malicious links.

Therefore it is desirable to provide an improved system and method for verifying hypertext links of encrypted e-mails.

"New Filtering Approaches for Phishing Email", by Andre Bergholz et al., (2009-01-18), pages 1-31, XP55022423, retrieved from: www.antiphishresearch.org/downloads/journal-08-12-16-final.pdf, describes a number of features that are particularly well-suited to identify phishing emails. These include statistical models for the low-dimensional descriptions of email topics, sequential analysis of email text and external links, the detection of embedded logos as well as indicators for hidden salting. Hidden salting is the intentional addition or distortion of content not perceivable by the reader. For empirical evaluation Andre Bergholz et al. obtained a large realistic corpus of emails prelabeled as spam, phishing, and ham (legitimate). In experiments the described methods outperform other published approaches for classifying phishing emails. The implications of these results for the practical application of this approach in the workflow of an email provider were discussed and a strategy of how the filters may be updated and adapted to new types of phishing.

"Encrypted E-mail: Close One Door, Open Another", by Sans Institute et al., 2011, pages 1-11, XP55022411, retrieved from: www.sans.org/reading_room/whitepapers/malicious/encrypted-e-mail-close-door-open_105, describes two options for performing a virus scan on encrypted email. The first described option requires providing a recipient's private key to a virus scanner server in order to enable the decryption of the email message at the virus scanner server. A second option described requires that the email be encrypted using a public key of associated with the virus scanner server.

### SUMMARY

A method, device and computer readable memory are provided for verifying hypertext links in an encrypted e-mail message to be sent to a mobile device to remove links that may contain malicious programs, link to a phishing website, or potentially comprise security of the mobile device or expose the user to unsafe sites or content. The hypertext links are extracted by decrypting the encrypted e-mail message. The hypertext links from the decrypted e-mail message are extracted and for each link the status is determined to verify the link. Actions can then be performed based upon the determined status of respective extracted hypertext links to ensure malicious links are not accessed by the mobile device.

In accordance with an aspect of the present description there is provided a method of verifying hypertext links in an encrypted e-mail message to be sent to a mobile device comprising: decrypting the encrypted e-mail message comprising at least one hypertext link; extracting the at least one hypertext link from the decrypted e-mail message; for each of the at least one extracted hypertext links, determining at a server a status of the extracted hypertext link; and performing one or more actions based upon the determined status of respective extracted hypertext links, wherein the decrypting of the encrypted e-mail message and extracting hypertexts links is performed by the mobile device, the method further comprising sending the extracted links to the server.

In accordance with another aspect of the present description there is provided a device for verifying hypertext links in an encrypted e-mail message to be sent to a mobile device, the device comprising: a memory for storing instructions; and a processor for executing the stored instructions, the instructions when executed by the processor configuring the device to provide functionality for: decrypting the encrypted email message comprising at least one hypertext link; extracting the at least one hypertext link from the decrypted e-mail message; for each of the at least one extracted hypertext links, determining a status of the extracted hypertext link; and performing one or more actions based upon the determined status of respective extracted hypertext links wherein the decrypting of the encrypted e-mail message and extracting hypertexts links is performed by the mobile device, the method further comprising sending the extracted links to the server.

In accordance with yet another aspect of the present description there is provided a computer readable memory containing instructions for verifying hypertext links in an encrypted e-mail message to be sent to a mobile device, the instructions when executed by a processor perform decrypting the encrypted e-mail message comprising at least one hypertext link; extracting the at least one hypertext link from the decrypted e-mail message; for each of the at least one extracted hypertext links, determining at a server a status of the extracted hypertext link; and performing one or more actions based upon the determined status of respective extracted hypertext links wherein the decrypting of the encrypted e-mail message and extracting hypertexts links is performed by the mobile device, the method further comprising sending the extracted links to the server.

### BRIEF DESCRIPTION OF THE DRAWINGS

Further features and advantages of the present disclosure will become apparent from the following detailed description, taken in combination with the appended drawings, in which:
Figure 1 shows a representation of a process of verifying hypertext links in encrypted e-mail messages;
Figure 2 shows a representation of a further process of verifying hypertext links in encrypted e-mail messages;
Figure 3 shows a representation of a further process of verifying hypertext links in encrypted e-mail messages;
Figure 4 shows a representation of a further process of verifying hypertext links in encrypted e-mail messages;
Figure 5 shows a representation of a further process of verifying hypertext links in encrypted e-mail messages;
Figure 6 shows a method of verifying hypertext links in encrypted e-mail messages;
Figure 7 shows a further method of verifying hypertext links in encrypted e-mail messages; and
Figure 8 shows a representation of an apparatus for verifying hypertext links in encrypted e-mail messages.

It will be noted that throughout the appended drawings, like features are identified by like reference numerals.

### DETAILED DESCRIPTION

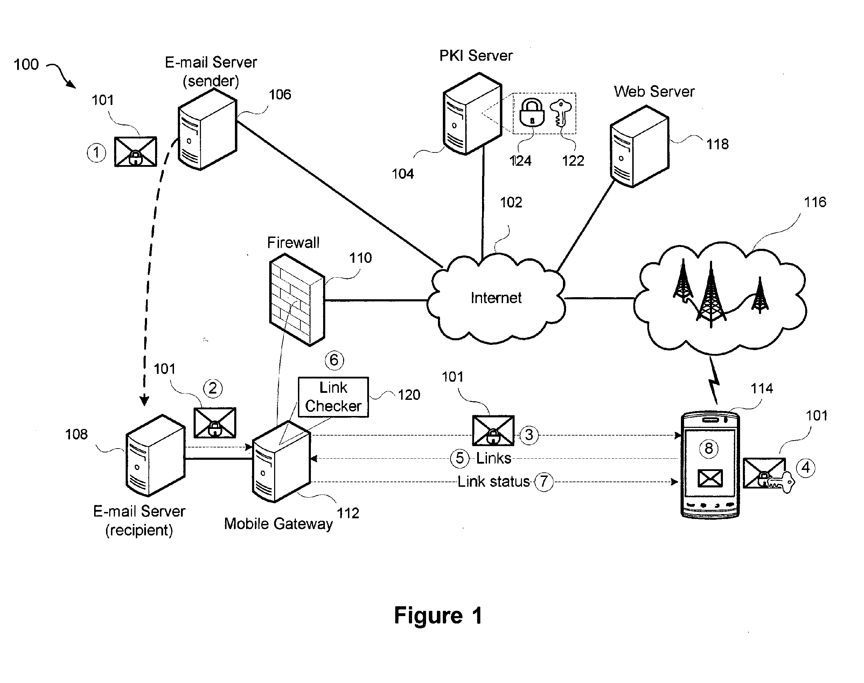

Embodiments are described below, by way of example only, with reference to Figures 1 to 8. Figures 1 to 5 show different processes of verifying hypertext links in encrypted e-mail. The processes described in Figures 1 to 5 are described with regards to a common network environment 100. The network environment 100 comprises a plurality of interconnected devices. As depicted, a plurality of servers are connected to a network such as the Internet 102 either directly or indirectly via intermediary networks. The servers include a public key infrastructure (PKI) server 104 that can provide a public key 124 associated with respective private key 122. It is noted that the PKI server 104 is depicted as storing both the public key 124 and the corresponding private key 122; however, the private key 122 may not be stored in the PKI server 104. Instead an identifier of the private key 122, such as a user name may be used to associate the private key 122 with the public key 124. The servers of the network environment 100 may further comprise an e-mail server 106, which in the description is assumed to be associated with a sender of an e-mail and an e-mail server 108, which in the description is assumed to be associated with a recipient of the e-mail. The e-mail server 108 is depicted as being behind a firewall 110. The firewall 110 may be used to protect an internal network such as a corporate network. The e-mail server 108 may be associated with a mobile gateway 112 that provides access to the e-mail server 108 for mobile devices 114 and mobile administration and management functions. The mobile gateway 112 may 'push' e-mails to mobile devices 114 as well as provide other functionality for mobile devices 114 in terms of mail processing. As depicted, the mobile gateway 112 comprises functionality 120 for verifying http links. The mobile devices 114 are connected to the other servers through a wireless infrastructure 116, such as a cellular network, mobile network, or local wireless or hotspot network, which is connected directly or indirectly to the Internet 102. The network environment 100 may be coupled to one or more web servers 118 for serving web sites identified in the http links via the Internet 102. A web site or web page may be malicious either in terms of phishing or providing malicious content, and users should be prevented from navigating to the malicious sites, or informed of the malicious sites.

In general, a sender may generate and encrypt an e-mail 101 to send to a recipient with a mobile device 114. The e-mail message 101 may be encoded in a standard format such as Multipurpose Internet Mail Extensions (MIME) which is an Internet standard that extends the format of e-mail. MIME supports text in character sets other than ASCII, non-text attachments, message bodies with multiple parts, and header information in non-ASCII character sets. The e-mail message 101 may be encrypted using a standard for public key encryption and signing such as Secure/Multipurpose Internet Mail Extensions (S/MIME) or other encryption technology. As described further herein, the links of the encrypted e-mail may be checked to verify whether or not they are considered malicious links. Although various embodiments are described, each utilizes functionality of the mobile gateway 112 or similar process provided in the e-mail server 108 to check the links of the encrypted e-mail 101.

Turning to Figure 1, a process of verifying hypertext links in encrypted e-mail messages is described. An e-mail sender creates an e-mail message for a recipient who will access the e-mail message via the mobile device 114. The sender 106 uses the public key 124 associated with the intended recipient of the e-mail to encrypt the email message. The encrypted e-mail message 101 is sent from the sender's e-mail server 106 to the recipient's e-mail server 108 (1) through one or more networks coupled to Internet 102, although the sender e-mail server 106 and the recipient e-mail server 108 may be on the same network or the same server. Once the encrypted e-mail message 101 is received at the sender's e-mail server 108 the mobile gateway 112 can retrieve the encrypted e-mail message 101 (2) and provide it to the mobile device 114 (3). The mobile device 114 receives the encrypted e-mail message 101 and uses the recipient's private key 122 to decrypt the encrypted e-mail message 101 (4). Once the e-mail message 101 is decrypted, the mobile device 114 extracts any hypertext links in the e-mail message, some of which may be associated with a malicious web server 118. Once the links have been extracted from the decrypted e-mail, the mobile device 114 sends them to mobile gateway 112 (5). The mobile gateway 112 receives the extracted hypertext link and uses the link verifying functionality 120 to check each of the links to determine if they are malicious or present a security risk (6). Once the links are checked, the status of the links is returned to the mobile device 114 (7). The status of the links may be sent in a message that associates the link with its status such as 'clean', 'likely malicious', 'malicious' or 'unknown'. Upon receiving the link status, the mobile device 114 may perform an action based on the link status to mitigate the possibility of a user visiting a malicious site 118 (8). For example, the action performed may be to remove malicious links with an indication that the link has been removed, redirecting the link to another verified website, appending text to the e-mail message 101 indicating the status of the links, adding a warning that the link cannot be verified as secure, or providing a warning before allowing the user to access the link. It will be appreciated that other actions may be performed based on the link status to prevent or deter a recipient from following malicious links in an encrypted e-mail message.

The process described with reference to Figure 1 allows links from within an encrypted e-mail message to be checked at a server to verify whether or not they are malicious links. The encrypted e-mail message 101 is decrypted by the mobile device 114, white the links are checked at a server. Although it may be possible to check links at a mobile device 114, the use of the server may enable more extensive or quicker verification to be performed without placing the device at risk. For example, on a mobile device 114, connection to the Internet 102 may be intermittent hindering or preventing the ability to check the hypertext links. Furthermore, the sever 112 may have access to a larger amount of information, due to processing a larger number of links, that can be used to improve the verifying of the links.

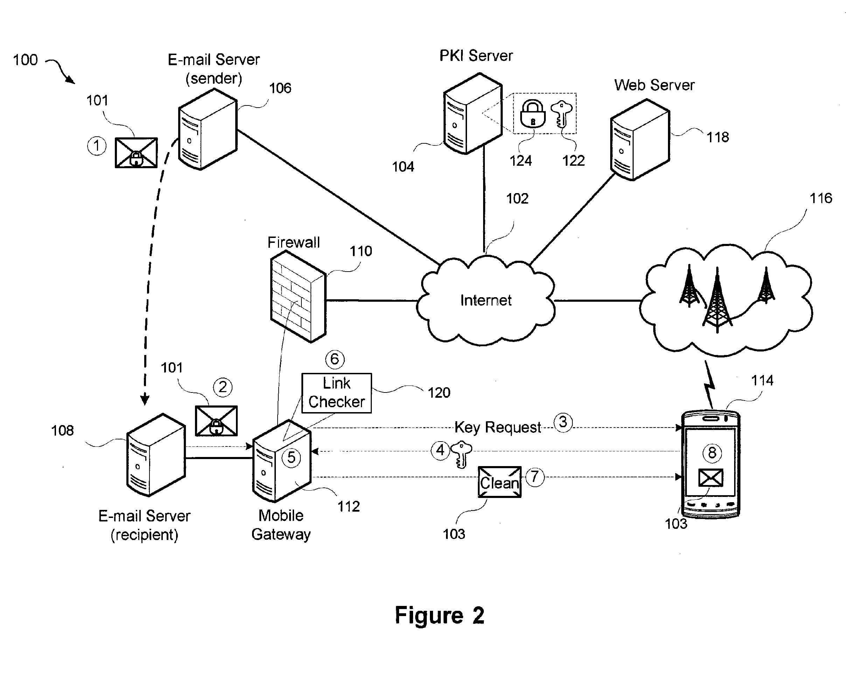

Turning to Figure 2, a further process of verifying hypertext links in encrypted email messages is described. Similar to Figure 1, an e-mail sender creates an e-mail message for a recipient. The sender uses the public key 124 associated with the intended recipient of the e-mail to encrypt the e-mail message 101. The encrypted email message 101 is sent from the sender's e-mail server 106 to the recipient's e-mail server 108 (1). Once the encrypted e-mail 101 is received at the sender's e-mail server 108 the mobile gateway 112 can retrieve the encrypted e-mail 101 (2). However unlike the process described with regards to Figure 1, the e-mail message 101 is decrypted by the mobile gateway 112 prior to deliver to the mobile device 114. In order to decrypt the e-mail message 101, the mobile gateway 112 requests the recipient's private key 120 from the mobile device 114 (3) and the mobile device 114 responds by returning the private key (4). Once the mobile gateway 112 has the private key 120, it decrypts the encrypted e-mail message 101 and extracts the hypertext links (5) contained therein. The mobile gateway 112 checks the links to verify whether or not they are links to a malicious web site 118 or content. Once the mobile gateway checks the links, it may perform actions on the decrypted e-mail based on the status of the links (6). The actions taken may be to generate a clean e-mail from the decrypted e-mail message by removing any links to malicious web sites. Once the clean e-mail message 103 is generated, it can be sent to the mobile device (7) and displayed by the mobile device (8).

As will be appreciated, decrypting the e-mail message 101 at the mobile gateway 112 may be unacceptable in certain applications since the recipient's private key must be sent to the mobile gateway 112. Although sending the private key may be considered a security risk, it is noted that the communication between the mobile gateway 112 and the mobile device 114 may be secured by encrypting all communications between the two devices. For example, the encryption may be done use a symmetric encryption technique, for which only the mobile device 114 and the mobile gateway 112 have the encryption/decryption keys. Furthermore, in certain applications, the mobile gateway 112 may be located in a trusted environment, for example it may be provided on a secured corporate network. As such, the risk associated with sending the recipient's private key to the mobile gateway may be acceptable in certain situations.

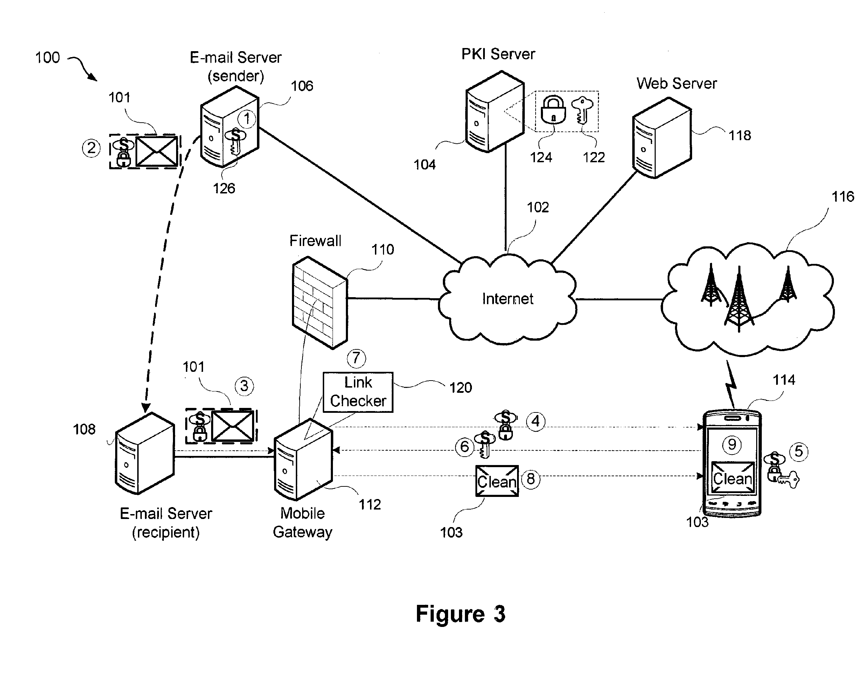

In applications where it is undesirable, unacceptable or impossible for the mobile device to send the private key to the mobile gateway 112, it may still be possible to verify links at a server for encrypted e-mails. Although, the above described the use of asymmetric encryption techniques for encrypting/decrypting the e-mail, the asymmetric techniques are computationally complex, especially when used to encrypt an entire email. Another option for encrypting the e-mail, is to generate an encryption key for encrypting the e-mail using a symmetric encryption technique, which is typically much less computationally complex. The symmetric key, which may be referred to as a session key, can then be encrypted using the asymmetric technique. The asymmetrically encrypted session key and the symmetrically encrypted e-mail may then be sent to the mobile device. As described further with regards to Figure 3, it is possible to verify links in an encrypted at a server when the e-mail is encrypted with a session key as described above.

Turning to Figure 3, a still further process of verifying hypertext links in encrypted e-mail messages is described. A sender generates a symmetric encryption key 126, referred to herein as a session key, and uses it to encrypt the e-mail message (1). The encryption used may be for example AES, triple DES or other symmetric encryption. The symmetric encryption key 126 is then encrypted using the public key 124 of the recipient. The encrypted session key 126 is sent with the encrypted e-mail 101 to the recipient's e-mail server 108 (2), which can be subsequently sent or retrieved by the mobile gateway 112 (3). The encrypted session key is retrieved from the encrypted email 101 and sent to the mobile device 114 (4). The mobile device 114 uses the recipient's private key 122 to decrypt the session key (5) and then sends the decrypted session key back to the mobile gateway (6). The mobile gateway receives the decrypted session key 126 and uses it to decrypt the encrypted e-mail message 101. Once the e-mail message 101 is decrypted the server extracts the hypertext links contained therein. The mobile gateway 112 checks the links to verify whether or not they are links to a malicious web site 118 or content. Once the mobile gateway 112 checks the links, it may perform actions on the decrypted e-mail message based on the status of the links (7). The actions taken may be to generate a clean e-mail from the decrypted e-mail message by removing any links to malicious web sites. Once the clean e-mail message 103 is generated, it can be sent to the mobile device 114 (8) and displayed by the mobile device 114 (9).

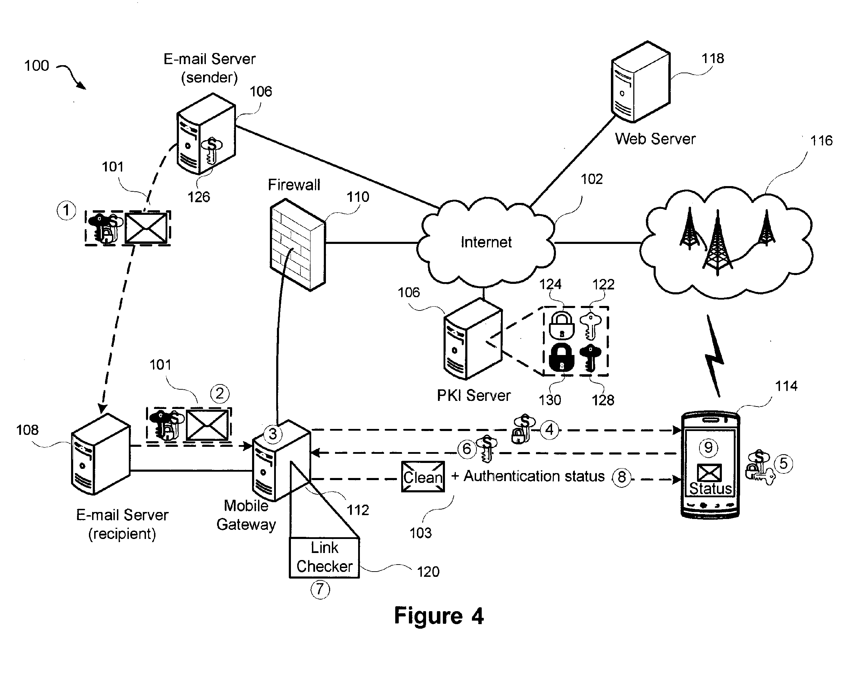

Turning to Figure 4, a still further process of verifying hypertext links in encrypted e-mail messages is described. The process of Figure 4 not only encrypts the e-mail so that it can't be read by anyone other than the intended recipient, but also signs the encrypted e-mail so that the recipient can verify that it was sent by the sender. The signing and verifying of the e-mail is depicted as being accomplished using a private key 128 and a public key 130 similar to those used for the encryption/decryption process. For clarity, the encryption and signing of e-mails are different processes; however both use a similar asymmetric cryptographic technique. While the encryption uses a recipient's public key so that only the recipient can decrypt it with their private key, the signing uses the sender's private key to sign the e-mail. The recipient can then authenticate the sender of the e-mail by verifying the signature using the sender's public key.

A sender generates and encrypts an e-mail message 101 using a session key, which is in turn encrypted using the recipient's public key. The encrypted e-mail is then signed by the sender. Once the sender has encrypted and signed the e-mail message 101 it is sent to the recipient's e-mail server 108 (1) and then to the mobile gateway 112 (2). The mobile gateway 112 receives the e-mail and authenticates the sender (3) and then sends the encrypted the session key to the mobile device 114 (4). The mobile device 114 decrypts the session key using the recipient's private key (5) and sends the decrypted session key to the mobile gateway 112 (6). Once the mobile device 114 has the decrypted session key the encrypted e-mail message 101 is decrypted by the mobile gateway 112 and the hypertext links are extracted. Once the hypertext links are extracted they are checked (7) to verify whether or not the links are malicious. Once the links have been checked a clean e-mail 103 may be generated and returned to the mobile device, along with a status of the authentication of the signed e-mail performed at the mobile gateway 112 (8). The clean e-mail 103 along with the authentication status may be displayed (9). The authentication status may indicate that the sender was authenticated at the server, or that authentication failed. Since the signed encrypted e-mail differs from the clean e-mail that is sent to the mobile device 114, the mobile device 114 is unable to authenticate the e-mail and so the authentication status is sent from the mobile device 114.

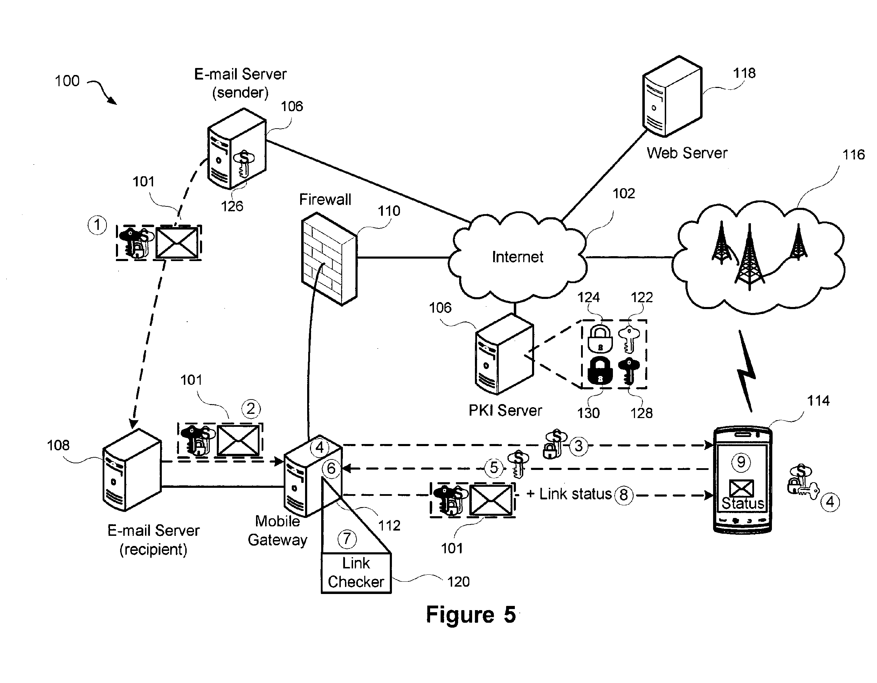

Turning to Figure 5, a yet further process of verifying hypertext links in encrypted e-mail messages is described. Similar to Figure 4, the sender generates an e-mail message 101 which is then encrypted and signed. Once the sender has encrypted and signed the e-mail message 101 it is sent to the recipient's e-mail server 108 (1) and then to the mobile gateway 112 (2). The mobile gateway 112 sends the encrypted session key to the mobile device 114 (3), which decrypts it (4) and returns it to the mobile gateway 112 (5). Once the mobile gateway 112 receives the decrypted session key and uses it to decrypt the encrypted e-mail message 101. The mobile gateway extracts the hypertext links from the decrypted e-mail (6). Once the hypertext links are extracted they are checked (7) to verify whether or not the links are malicious. Once the link status of the links has been determined, the mobile gateway 112 may send the encrypted and signed e-mail along with the determined link statuses to the mobile gateway (8). Once the encrypted and signed e-mail message 101 is received, it can be authenticated and decrypted at the mobile device 114 (9). The mobile device 114 may take one or more actions based on the link status before displaying the e-mail message 101. For example, the action performed may be to remove malicious links with an indication that the link has been removed, redirecting the link to another verified website, appending text to the e-mail message 101 indicating the status of the links, adding a warning that the link cannot be verified as secure, or providing a warning before allowing the user to access the link.

As an alternative to sending the encrypted e-mail message 101 to the mobile device 114 after the links have been verified, the mobile gateway 112 may send the encrypted e-mail message to the mobile device 114 before verifying the links. The mobile device may then authenticate and decrypt the e-mail message 101 and send the decrypted e-mail or extracted links back to the mobile gateway 112for verification.

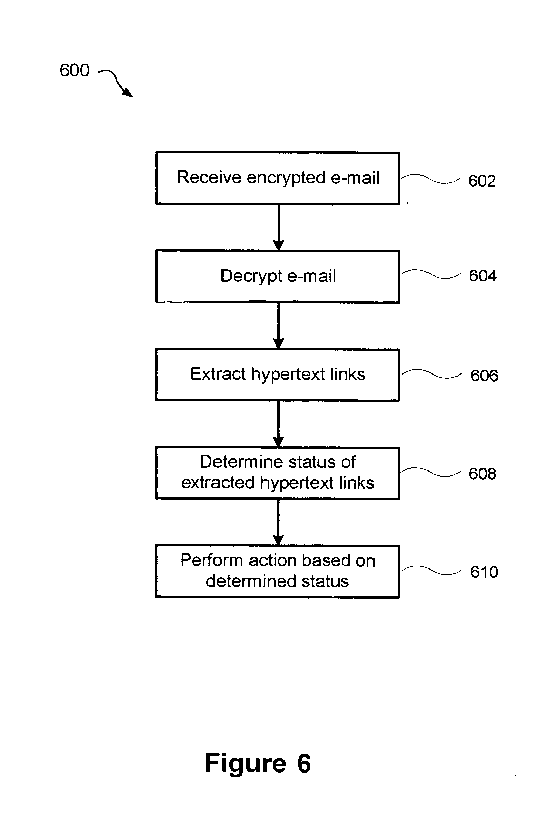

Figure 6 shows a method of verifying hypertext links in encrypted e-mail messages. The method 600 receives an encrypted e-mail message 101 at a recipient's e-mail server 108 (602). The e-mail message 101 is decrypted (604). The e-mail message 101 may be decrypted at the mobile gateway 112 or on the mobile device 114. Once the e-mail message 101 is decrypted the hypertext links are extracted from the email message (606) and the status of the extracted hypertext links is determined (608) by verifying the links by the mobile gateway 112 by one or more verification methods. The status indicates whether the links have been verified to be non-malicious or malicious links. Once the link status is determined, actions may be performed based on the determined status (610) to mitigate the risk posed by the links.

The actions may be based upon user preference, mobile device or software configuration or administrator configuration settings on how to deal with particular types of links contained in the message. The actions performed based on the link status determined by verification may vary and may be performed by the mobile gateway, the mobile device, or a combination of both the mobile gateway and the mobile device. For example the actions may include removing malicious links from the e-mail messages, sending an indication to the mobile device that one or more links are malicious, either with the message or via separate communication process; sending an indication to the mobile device which links are malicious; sending an indication to the mobile device that the e-mail message is verified to have no malicious links; rejecting the e-mail message if it contains malicious links; marking malicious links as un-followable to prevent a recipient from browsing to web sites of malicious links; and marking an e-mail message as un-forwardable if it has a malicious link to prevent the e-mail from being replied to or forwarded.

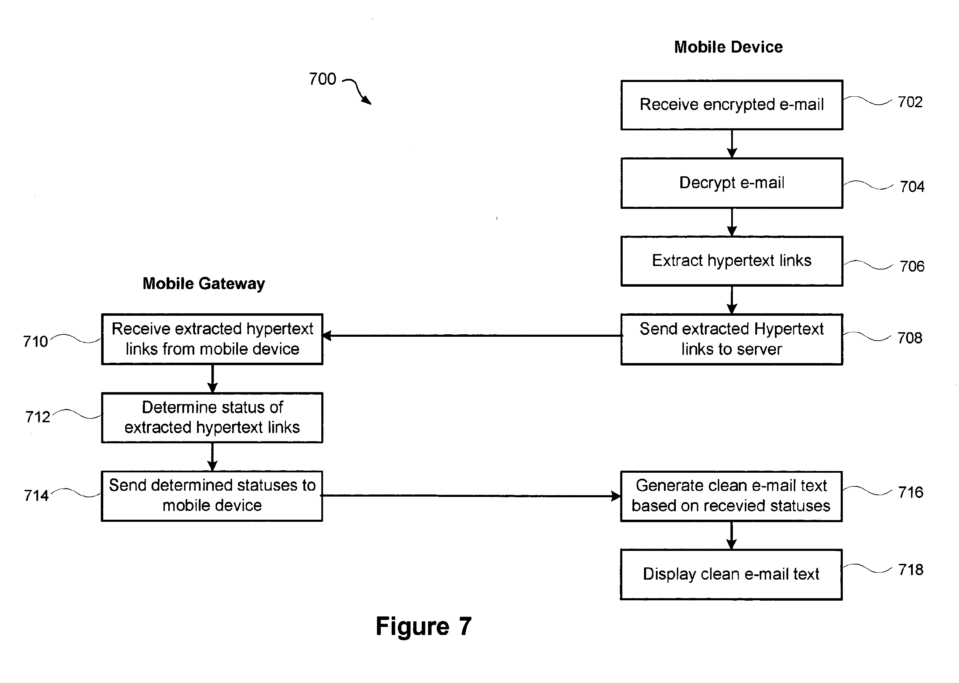

Figure 7 shows a further method of verifying hypertext links in encrypted e-mail. Respective steps performed on the mobile device and the mobile gateway 112 are depicted in Figure 7. The method 700 may be used to provide a process in accordance with the process of Figure 1; however a suitably modified method may be used to provide a process in accordance with the process of one or more of Figures 2 to 5. As depicted the method 700 begins with the mobile device 114 of an e-mail message recipient receiving an encrypted e-mail message 101 (702). The received e-mail message 101 includes at least one hypertext link. Once the encrypted e-mail message 101 is received, it is decrypted (704) using the recipient's private key and the hypertext links are extracted (706) from the decrypted e-mail message 101. The e-mail may be encrypted using a session key which is in turn encrypted using the public key of the recipient as described above. The mobile device 114 sends the extracted hypertext link to the mobile gateway server 112 (708). The mobile gateway server 112 receives the extracted hypertext links from the mobile device 114 (710). The mobile gateway server 112 determines the status of the extracted hypertext links (712) by performing verification checks of links to determine if any of the links are to malicious or potentially malicious websites 118, or have been identified as such. Once the link status for each of the links in the e-mail message 101 is determined it is returned to the mobile device 114 (714). The mobile device 114 receives the link status and performs one or more actions based on the link status. For example, the mobile device 114 may generate a clean e-mail message based on the received status (716) by replacing any malicious links with an indication that a malicious link has been removed. Once the clean e-mail message has been generated, it can be displayed on the mobile device 114 (718).

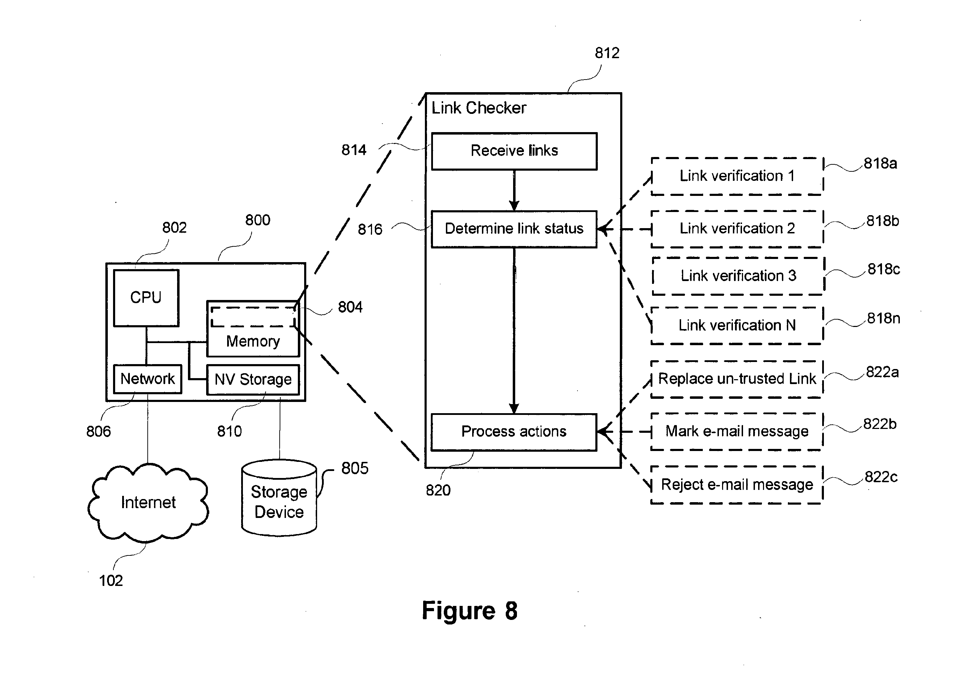

Figure 8 shows a representation of an apparatus for verifying hypertext links in encrypted e-mail message. The apparatus 800 may be for example a mobile gateway 112. The apparatus 800 comprises a central processing unit (CPU) 802 for processing instructions. The apparatus 800 further comprises a memory 804 for storing instructions. The apparatus 800 further comprises a network interface 806 for connecting the apparatus to the Internet 808, or other network. The apparatus may further comprise non-volatile storage 810.

The instructions are executed by the CPU 802 and configure the apparatus to provide various functionality including functionality for determining the status of a link by verifying links 812. The link verifying functionality 812 includes functionality for receiving links from an encrypted e-mail message 814. As described above, the links may be received from a mobile device 114, or may be received from a link extraction process on the apparatus 800. The link verifying functionality 812 further comprises functionality for determining a status of each of the extracted links 816. The link verification functionality may be provided by one or more link verification techniques which may be stored locally, in a storage device 805 coupled to the server or retrieved from a remote storage location through a network. The status determination functionality may use one or more of a plurality of link verification techniques 818a, 818b, 818c, 818n. For example a first link verification technique 818a, may compare a link text of the hypertext link to the URL of the hypertext link to see if they match. If they match, then the link may be verified to be non-malicious and if they don't match the link may be malicious. A second verification technique 818b may be applied to hypertext transfer protocol secure (HTTPS) links. The verification technique 818b may verify the security certificate of the web site of the link to check, for example, its trust status, revocation status, expiry, and strength of its hashing algorithm or cipher. If the security certificate is verified, then the link may be considered as non-malicious and if it is not verified, the link may be considered as malicious. A third verification technique 818c may be to check the link against a black list. If the link matches to an entry on the black list the link is considered as malicious, and if it is not on the list the link is considered as non-malicious. A fourth verification technique 818n may be a white list. If the link matches to an entry on the white list the link is considered non-malicious and if it is not on the list the link may be considered malicious. One or more of the verification techniques may be employed depending on the type of link and system or device configuration. Other link verification techniques may be employed to verify the safety of an http link, the associated website or content contained therein.

The link verifying functionality 812 may further comprise functionality for performing various actions based on the determined link status. Although depicted as part of the mobile gateway, the functionality for performing the various actions may be included in the mobile device. Various actions 822a, 822b, 822c may be performed based on the link status. For example, a malicious link may be replaced in the HTML email message to indicate that the link was removed. Additionally or alternatively, the email message may be marked to provide the status of the links that is if any of the links in the e-mail messages are malicious, the e-mail message may be marked as malicious. Additionally or alternatively, the e-mail message may be marked as un-followable so that the recipient's mobile device does not allow the recipient to follow any links in a malicious message, or any malicious links, and/or cannot copy a link to a browser. Additionally or alternatively the e-mail message may be marked as un-forwardable so that the recipient's mobile device does not allow the recipient to reply to or forward the e-mail message. A further action that may be taken is to reject the e-mail. The actions may be performed by the mobile device 114, mobile gateway 112, or combination of the mobile device 112 and mobile gateway 114.

Although not depicted in Figure 8, the link checking functionality 812 may comprise functionality for authenticating a signed e-mail. The link checking functionality 812 may also comprise functionality for decrypting an e-mail. The decryption may be done using a private key of the recipient or using a received decrypted session key used to encrypt the e-mail. The link checking functionality may further comprise functionality for extracting hypertext links from a decrypted e-mail.

As described above it is possible to verify links within an encrypted e-mail message that is sent to, or will be sent to, a mobile device 114. Various embodiments of processes, methods and apparatuses have been described to fully illustrate the features of the link verifying. It will be appreciated, that white many features have been described in detail, other features, modifications or embodiments that would be obvious to one skilled in the art having regard to the current description have not been described in detail, or have not been described. Further, the embodiments described herein may be provided by, or implemented in, various combinations of hardware, software and/or firmware. The software may be embodied or stored in a non-transitory computer readable memory or medium.

## Claims

1. A method of verifying hypertext links in an encrypted e-mail message (101) to be sent to a mobile device (114) comprising:
decrypting (604) the encrypted e-mail message (101) comprising at least one hypertext link;
extracting (606) the at least one hypertext link from the decrypted e-mail message;
for each of the at least one extracted hypertext links, determining (608) at a server (112) a status of the extracted hypertext link; and
performing (610) one or more actions based upon the determined status of respective extracted hypertext links,
**characterized in that** the decrypting of the encrypted e-mail message and extracting hypertext links is performed by the mobile device, the method further comprising sending the extracted links to the server.

2. The method of claim 1 wherein the one or more actions comprise sending the determined statuses of the one or more extracted hypertext links to the mobile device.

3. The method of claim 2 wherein each of the determined link statuses comprise an indication of the link being a verified link or an unverified link.

4. The method of any one of claims 1 to 3, wherein the one or more actions comprise replacing any unverified link or removing any unverified link with an indication that the link has been removed.

5. The method of any one of claims 1 to 4, wherein the encrypted e-mail message is further signed by a sender of the e-mail, the method further comprising:
authenticating the sender of the signed e-mail message.

6. The method of claim 5, wherein the one or more actions comprise one or more of:
replacing an unverified link with an indication that the link has been removed;
adding a status indicator to the e-mail message based on the determined statuses
of the one or more extracted hypertext links;
adding an indicator to the message preventing the mobile device from opening any links in a browser and/or preventing the mobile device from copying the link into a browser;
rejecting the encrypted e-mail message; and
marking the encrypted e-mail message as unforwardable preventing the mobile device from replying to the e-mail message or forwarding the e-mail message.

7. The method of any one of claims 1 to 6, wherein determining the status of each extracted hypertext link comprises performing one or more verification techniques selected from the group comprising:
verifying that a universal resource locator (URL) matches a link text of the hypertext link for an embedded hypertext link;
verifying a certification status for a hypertext transfer protocol secure (HTTPS) hypertext link;
verifying that the hypertext link is a link to a location internal to a particular network;
verifying that the hypertext link is not on a black list; and
verifying that the hypertext link is on a white list.

8. A device (112) for verifying hypertext links in an encrypted e-mail message to be sent to a mobile device, the device comprising:
a memory (804) for storing instructions; and
a processor (802) for executing the stored instructions, the instructions for performing the method of claims 1 to 7.

9. A computer readable memory containing instructions for verifying hypertext links in an encrypted e-mail message to be sent to a mobile device, the instructions when executed by a processor perform the method of claims 1 to 7.

## Patentansprüche

1. Verfahren zum Verifizieren von Hypertextlinks in einer verschlüsselten EMail-Nachricht (101), die an eine Mobilvorrichtung (114) gesendet werden soll, m it:
Entschlüsseln (604) der verschlüsselten E-Mail-Nachricht (101) mit mindestens einem Hypertextlink,
Extrahieren (606) des mindestens einen Hypertextlinks aus der entschlüsselten E-Mail-Nachricht,
Bestimmen (608) eines Status des extrahierten Hypertextlinks für jeden des mindestens einen extrahierten Hypertextlinks an einem Server (112) und
Durchführen (610) einer oder mehrerer Aktionen aufgrund des bestimmten Status von jeweiligen extrahierten Hypertextlinks,
**dadurch gekennzeichnet, dass** das Entschlüsseln der verschlüsselten EMail-Nachricht und das Extrahieren von Hypertextlinks von der Mobilvorrichtung durchgeführt werden, wobei das Verfahren ferner ein Senden des extrahierten Links an den Server aufweist.

2. Verfahren nach Anspruch 1, wobei die eine oder die mehreren Aktionen ein Senden der bestimmten Status des einen oder der mehreren extrahierten Hypertextlinks an die Mobilvorrichtung aufweisen.

3. Verfahren nach Anspruch 2, wobei jeder der bestimmten Linkstatus eine Angabe aufweist, dass der Link ein verifizierter Link oder ein nicht verifizierter Link ist.

4. Verfahren nach einem der Ansprüche 1 bis 3, wobei die eine oder die mehreren Aktionen ein Ersetzen eines etwaigen nicht verifizierten Links oder Entfernen eines etwaigen nicht verifizierten Links mit einer Angabe, dass der Link entfernt worden ist, aufweist.

5. Verfahren nach einem der Ansprüche 1 bis 4, wobei die verschlüsselte EMail-Nachricht ferner von einem Sender der E-Mail signiert wird, wobei das Verfahren ferner Folgendes aufweist:
Authentifizieren des Senders der signierten E-Mail-Nachricht.

6. Verfahren nach Anspruch 5, wobei die eine oder die mehreren Aktionen eines oder mehrere aus Folgendem aufweist:
Ersetzen eines nicht verifizierten Links mit einer Angabe, dass der Link entfernt worden ist,
Hinzufügen eines Statusindikators zur E-Mail-Nachricht aufgrund der bestimmten Status des einen oder der mehreren extrahierten Hypertextlinks,
Hinzufügen eines Indikators zur Nachricht, der die Mobilvorrichtung daran hindert, irgendwelche Links in einem Browser zu öffnen, und/oder die Mobilvorrichtung daran hindert, den Link in einen Browser zu kopieren,
Zurückweisen der verschlüsselten E-Mail-Nachricht und
Kennzeichnen der verschlüsselten E-Mail-Nachricht als nicht weiterleitbar, was die Mobilvorrichtung daran hindert, auf die E-Mail-Nachricht zu antworten oder die E-Mail-Nachricht weiterzuleiten.

7. Verfahren nach einem der Ansprüche 1 bis 6, wobei das Bestimmen des Status jedes extrahierten Hypertextlinks ein Durchführen einer oder mehrerer Verifiziertechniken aufweist, die aus der Gruppe ausgewählt sind, die Folgendes aufweist:
Verifizieren, dass eine URL, "Universal Resource Locator", einem Linktext des Hypertextlinks für einen eingebetteten Hypertextlink entspricht,
Verifizieren eines Zertifizierstatus für einen HTTPS-, "Hypertext Transfer Protocol Secure"-, Hypertextlink,
Verifizieren, dass der Hypertextlink ein Link zu einer für ein bestimmtes Netz internen Stelle ist,
Verifizieren, dass der Hypertextlink nicht auf einer schwarzen Liste ist, und
Verifizieren, dass der Hypertextlink auf einer weißen Liste ist.

8. Vorrichtung (112) zum Verifizieren eines Hypertextlinks in einer verschlüsselten E-Mail-Nachricht, die an eine Mobilvorrichtung gesendet werden soll, wobei die Vorrichtung Folgendes aufweist:
einen Speicher (804) zum Speichern von Anweisungen und
einen Prozessor (802) zum Ausführen der gespeicherten Anweisungen, wobei die Anweisungen dem Durchführen des Verfahrens nach einem der Ansprüche 1 bis 7 dienen.

9. Computerlesbarer Speicher, der Anweisungen zum Verifizieren von Hypertextlinks in einer verschlüsselten E-Mail-Nachricht beinhaltet, die an eine Mobilvorrichtung gesendet werden soll, wobei die Anweisungen, wenn sie von einem Prozessor ausgeführt werden, das Verfahren nach einem der Ansprüche 1 bis 7 durchführen.

## Revendications

1. Procédé de vérification de liens hypertextes dans un message de courrier électronique chiffré (101) à envoyer à un dispositif mobile (114), comprenant :
le déchiffrement (604) du message de courrier électronique chiffré (101) comprenant au moins un lien hypertexte ;
l'extraction (606) dudit au moins un lien hypertexte du message de courrier électronique déchiffré ;
pour chacun desdits au moins un liens hypertextes extraits, la détermination (608), au niveau d'un serveur (112), d'un état du lien hypertexte extrait ; et
l'exécution (610) d'une ou de plusieurs actions sur la base de l'état déterminé des liens hypertextes extraits respectifs,
**caractérisé en ce que** le déchiffrement du message de courrier électronique chiffré et l'extraction des liens hypertextes sont effectués par le dispositif mobile, le procédé comprenant en outre l'envoi des liens extraits au serveur.

2. Procédé selon la revendication 1, dans lequel lesdites une ou plusieurs actions comprennent l'envoi des états déterminés desdits un ou plusieurs liens hypertextes extraits au dispositif mobile.

3. Procédé selon la revendication 2, dans lequel chacun des états de lien déterminés comprend une indication de ce que le lien est un lien vérifié ou un lien non vérifié.

4. Procédé selon l'une quelconque des revendications 1 à 3, dans lequel lesdites une ou plusieurs actions comprennent le remplacement de tout lien non vérifié ou le retrait de tout lien non vérifié par une indication que le lien a été retiré.

5. Procédé selon l'une quelconque des revendications 1 à 4, dans lequel le message de courrier électronique chiffré est en outre signé par un expéditeur du courrier électronique, le procédé comprenant en outre :
l'authentification de l'expéditeur du message de courrier électronique signé.

6. Procédé selon la revendication 5, dans lequel lesdites une ou plusieurs actions comprennent un ou plusieurs :
du remplacement d'un lien non vérifié par une indication que le lien a été retiré ;
de l'ajout d'un indicateur d'état au message de courrier électronique sur la base des états déterminés desdits un ou plusieurs liens hypertextes extraits ;
de l'ajout d'un indicateur au message empêchant le dispositif mobile d'ouvrir tout lien dans un navigateur et/ou empêchant le dispositif mobile de copier le lien dans un navigateur ;
du rejet du message de courrier électronique chiffré ; et
du marquage du message de courrier électronique chiffré comme étant non acheminable, empêchant le dispositif mobile de répondre au message de courrier électronique ou d'acheminer le message de courrier électronique.

7. Procédé selon l'une quelconque des revendications 1 à 6, dans lequel la détermination de l'état de chaque lien hypertexte extrait comprend l'exécution d'une ou de plusieurs techniques de vérification sélectionnées dans le groupe comprenant :
la vérification qu'un localisateur de ressource universel (adresse Web) correspond à un texte de lien du lien hypertexte pour un lien hypertexte intégré ;
la vérification d'un état de certification pour un lien hypertexte de protocole de transfert hypertexte sécurisé (HTTPS) ;
la vérification que le lien hypertexte est un lien vers un emplacement interne à un réseau particulier ;
la vérification que le lien hypertexte n'est pas sur une liste noire ; et
la vérification que le lien hypertexte est sur une liste blanche.

8. Dispositif (112) pour vérifier les liens hypertextes dans un message de courrier électronique chiffré à envoyer à un dispositif mobile, le dispositif comprenant :
une mémoire (804) pour mémoriser des instructions ; et
un processeur (802) pour exécuter les instructions mémorisées, les instructions étant destinées à exécuter le procédé selon les revendications 1 à 7.

9. Mémoire pouvant être lue par un ordinateur contenant des instructions pour vérifier les liens hypertextes dans un message de courrier électronique chiffré à envoyer à un dispositif mobile, les instructions, lorsqu'elles sont exécutées par un processeur, exécutant le procédé selon les revendications 1 à 7.
